# EUROPEAN PATENT APPLICATION

(11) **EP 4 746 231 A1**
(43) Date of publication of application: **20.05.2026**
(21) Application number: 24887408.3
(22) Date of filing: 21.06.2024
(51) Int. Cl.: H02J 3/32

(54) **HYBRID ENERGY STORAGE SYSTEM AND CONTROL METHOD THEREFOR**

(30) Priority: 08.11.2023 CN 202311476281
(71) Applicant: Dyness Digital Energy Technology Co., Ltd., Suzhou, Jiangsu 215000 (CN)
(72) Inventor: HUANG, Wei, Suzhou, Jiangsu 215000 (CN); LI, Cheng, Suzhou, Jiangsu 215000 (CN); LIU, Yang, Suzhou, Jiangsu 215000 (CN)
(74) Representative: Chung, Hoi Kan
(86) International application number: PCT/CN2024/100685
(87) International publication number: WO 2025/097784

(57) **Abstract**

The present application relates to the technical field of energy storage control. Disclosed are a hybrid energy storage system and a control method therefor. The hybrid energy storage system comprises a photovoltaic power generation unit, a battery unit, an oil engine power generation unit, a load, a bi-directional converter and a direct-current bus. The control method comprises: on the basis of a power generation state of a photovoltaic power generation unit, determining an energy input state of a hybrid energy storage system, wherein the energy input state comprises the presence of a photovoltaic input and the absence of a photovoltaic input; and on the basis of the energy input state of the hybrid energy storage system and a pre-constructed energy interaction control model, controlling an operation mode of the hybrid energy storage system, wherein the operation mode of the hybrid energy storage system comprises one or more of an operation mode of the photovoltaic power generation unit, an operation mode of a battery unit, and an operation mode of an oil engine power generation unit. The energy storage system and the control method therefor solve the problems of requirements for the collection and control over the frequency, phase and amplitude of a system energy source being relatively high, and the energy utilization rate being relatively low.

## Description

### FIELD OF THE INVENTION

The present application relates to the technical field of energy storage control, and in particular, to a hybrid energy storage system and a control method therefor.

### BACKGROUND

With the application of new energy, limitations of a conventional photovoltaic power generation system are gradually prominent, such as a low photovoltaic utilization rate caused by instability of photovoltaic power generation power and a time limit. Therefore, a combination of photovoltaic power generation and an energy storage device can effectively resolve the problem of the low utilization rate of photovoltaic power generation.

Although a combination of photovoltaic power generation and an energy storage device can resolve the problem of the low utilization rate of photovoltaic power generation, overall photovoltaic power generation is still affected by some factors, such as insufficient light duration, an unsuitable geographical location for installing solar panels, and the like. Due to regional limitations, the popularization of photovoltaic power generation is greatly affected.

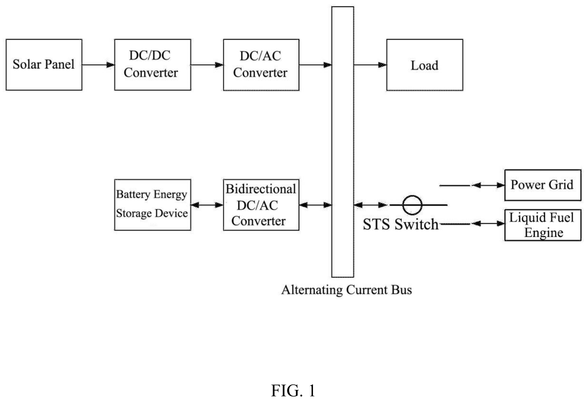

Therefore, the combination of an liquid fuel engine and photovoltaic energy storage has become an important application at this stage. FIG. 1 shows a common system of a combination of an liquid fuel engine and photovoltaic energy storage in the prior art. In FIG. 1, the one-way arrows indicate that energy can flow only in the arrow direction, and the two-way arrows indicate that energy can flow in two directions. The working process of the system is as follows: A solar panel converts light energy into a direct current, and then the direct current is converted into an alternating current by a DC/DC converter and a DC/AC converter; in addition, energy output by a battery energy storage device is converted into an alternating current by using an inverter function of a bidirectional DC/AC current converter; the alternating current output by the solar panel after conversion and the alternating current output by the battery energy storage device after conversion are supplied to a load together by an alternating current bus; the alternating current bus is connected to a power grid and the liquid fuel engine via a static transfer switch (STS), that is, the alternating current bus can be connected to the power grid via the STS, and the system works in a grid-connected state, or the alternating current bus is connected to the liquid fuel engine via the STS, and the liquid fuel engine is used to generate power to supply electric energy to the system.

However, a connection manner of an existing energy storage system has the following disadvantages: First, due to the frequency and phase issues of an alternating current, all energy sources on an alternating current bus can be connected together only when they are at a same frequency, a same phase, and a same amplitude. If all the energy sources connected to the alternating current bus are not at a same frequency, a same phase, and a same amplitude, the system will generate large reactive power, and the energy utilization rate will be reduced. Therefore, in the system shown in FIG. 1, requirements for acquisition and control of frequencies, phases, and amplitudes of all the energy sources are relatively high. Second, if electric energy output by a solar panel or an liquid fuel engine needs to be stored in a battery energy storage device, the electric energy output by the solar panel or the liquid fuel engine needs to be first converted and output to the alternating current bus, and then the energy on the alternating current bus is converted and stored in the battery energy storage device. When the battery energy storage device subsequently discharges to provide energy for the system, the energy output by the battery energy storage device still needs to be subjected to multi-stage conversion to supply power to a load. Therefore, in the system shown in FIG. 1, a large loss occurs in an energy interaction process, and the energy utilization rate is low, resulting in energy waste.

### SUMMARY OF THE INVENTION

To resolve the problems of high requirements for acquisition and control of frequencies, phases, and amplitudes of energy sources in existing energy storage systems, as well as a low energy utilization rate, the present application provides a hybrid energy storage system and a control method therefor.

In a first aspect, the present application provides a control method for a hybrid energy storage system. The control method adopts the following technical solutions.

The hybrid energy storage system includes a photovoltaic power generation unit, a battery unit, an liquid fuel engine power generation unit, a load, a bidirectional current converter, and a direct current bus. The control method includes:
determining, based on a power generation state of the photovoltaic power generation unit, an energy input state of the hybrid energy storage system, where the energy input state includes the presence of a photovoltaic input and the absence of a photovoltaic input;
controlling, based on the energy input state of the hybrid energy storage system and a pre-constructed energy interaction control model, a working mode of the hybrid energy storage system, where the working mode of the hybrid energy storage system includes one or more of a working mode of the photovoltaic power generation unit, a working mode of the battery unit, and a working mode of the liquid fuel engine power generation unit.

In the above step, the energy interaction control model includes a first energy interaction control sub-model and a second energy interaction control sub-model; the first energy interaction control sub-model is configured to control the working mode of the hybrid energy storage system when the hybrid energy storage system has a photovoltaic input; and the second energy interaction control sub-model is configured to control the working mode of the hybrid energy storage system when the hybrid energy storage system has no photovoltaic input.

By adopting the above technical solutions, a direct current bus system is constructed based on the photovoltaic power generation unit, the battery unit, the liquid fuel engine power generation unit, the load, the bidirectional current converter, and the direct current bus, such that the hybrid energy storage system performs energy interaction through the direct current bus, thereby avoiding the problem of high requirements for acquisition and control of frequencies, phases, and amplitudes of a plurality of energy sources in a hybrid energy storage system connected by using an alternating current bus, and a connection manner by using the direct current bus only needs to consider a voltage. In addition, when energy on the direct current bus is stored in the battery unit or energy of the battery unit is output, multi-stage conversion is not required, thereby greatly reducing a loss in an energy conversion process, significantly improving energy conversion efficiency, ensuring a high energy utilization rate, and avoiding energy waste. According to the energy interaction control model, the working modes of the system are finely divided and controlled for a case in which the system has a photovoltaic input and a case in which the system has no photovoltaic input, thereby further improving the energy utilization rate of the system.

In a specific implementable solution, controlling, through the first energy interaction control sub-model, the working mode of the hybrid energy storage system specifically includes:
controlling the photovoltaic power generation unit to supply power to the load through the direct current bus and the bidirectional current converter, and determining whether energy provided by the photovoltaic power generation unit is able to meet a power demand of the load;
if the energy provided by the photovoltaic power generation unit is able to meet the power demand of the load, controlling the battery unit to dynamically absorb remaining energy of the hybrid energy storage system; and
if the energy provided by the photovoltaic power generation unit is unable meet the power demand of the load, controlling the battery unit to supply power to the load through the direct current bus and the bidirectional current converter; determining whether the sum of the energy provided by the photovoltaic power generation unit and energy provided by the battery unit is able to meet the power demand of the load; and
if the sum of the energy provided by the photovoltaic power generation unit and the energy provided by the battery unit is unable to meet the power demand of the load, starting the liquid fuel engine power generation unit, and controlling, based on the power demand of the load, the liquid fuel engine power generation unit to switch a working mode.

In the above step, the working mode of the liquid fuel engine power generation unit includes a first working mode and a second working mode, the first working mode indicates that the liquid fuel engine power generation unit is within a high-efficiency power generation range, and the second working mode indicates that the liquid fuel engine power generation unit is within a common power generation range.

By adopting the above technical solutions, when the hybrid energy storage system has a photovoltaic input, the photovoltaic power generation unit first provides energy for the load, and then it is determined whether a power generation amount of the photovoltaic power generation unit meets a demand of the load. If the power generation amount of the photovoltaic power generation unit meets the demand of the load, only the battery unit needs to be controlled to dynamically adjust energy interaction in the system. If the power generation amount of the photovoltaic power generation unit does not meet the demand of the load, the battery unit is first used to supplement and provide energy. When a sum of the energy provided by the photovoltaic unit and energy provided by the battery unit still is unable to meet the demand of the load, the liquid fuel engine power generation unit is then started, and the liquid fuel engine power generation unit is controlled to enter different working modes based on the power demand of the load. The energy interaction in the system is controlled based on an actual situation of the load, to achieve effective utilization of the energy.

In a specific implementable solution, controlling, through the second energy interaction control sub-model, the working mode of the hybrid energy storage system specifically includes:
determining, based on a remaining electricity charge of the battery unit and the power demand of the load, whether the energy provided by the battery unit is able to meet the power demand of the load;
if the energy provided by the battery unit is able to meet the power demand of the load, controlling the battery unit to supply power to the load through the direct current bus and the bidirectional current converter; and
if the energy provided by the battery unit is unable to meet the power demand of the load, starting the liquid fuel engine power generation unit, and controlling, based on the power demand of the load, the liquid fuel engine power generation unit to switch a working mode.

By adopting the above technical solutions, when the system has no photovoltaic input, it is first determined whether the energy provided by the battery unit is able to meet the power demand of the load. If the energy provided by the battery unit is able to meet the power demand of the load, it is only necessary to control the battery unit to supply power to the load; and if the energy provided by the battery unit is unable to meet the power demand of the load, the liquid fuel engine power generation unit is started, and the liquid fuel engine power generation unit is controlled to enter different working modes based on the power demand of the load. By controlling the energy interaction in the system based on an actual situation of the load, the effective utilization of energy is achieved.

In a specific implementable solution, controlling, based on the power demand of the load, the liquid fuel engine power generation unit to switch the working mode specifically includes:
if the power demand of the load is within a first preset power demand range, controlling the liquid fuel engine power generation unit to enter the first working mode, and
controlling the liquid fuel engine power generation unit to directly supply power to the load; and
if the power demand of the load falls outside the first preset power demand range, controlling the liquid fuel engine power generation unit to enter the second working mode, and controlling the liquid fuel engine power generation unit to supply power to the load through the direct current bus and the bidirectional current converter.

By adopting the above technical solutions, when the power demand of the load is large, the liquid fuel engine power generation unit works in the first working mode, that is, the liquid fuel engine power generation unit is within the high-efficiency power generation range, and the energy output by the liquid fuel engine power generation unit is directly supplied to the load, which can not only meet the demand of the load quickly and efficiently, but also ensure that the liquid fuel engine power generation unit is in a stage with high working efficiency, thereby avoiding fuel waste; when the power demand of the load is small, the liquid fuel engine power generation unit does not need to work in the high-efficiency power generation range, and in this case, the liquid fuel engine power generation unit works in the second working mode, that is, the liquid fuel engine power generation unit is within the common power generation range, and the energy output by the liquid fuel engine power generation unit is controlled to supply power to the load through a direct current bus path inside the system. The working mode of the liquid fuel engine power generation unit can be adjusted according to different situations, which improves the energy efficiency of the liquid fuel engine power generation unit in the whole range.

In a specific implementable solution, after controlling, based on the power demand of the load, the liquid fuel engine power generation unit to switch the working mode, the method further includes:
if the liquid fuel engine power generation unit enters the first working mode, controlling the photovoltaic power generation unit, the battery unit, and the liquid fuel engine power generation unit to supply power to the load, or controlling the battery unit to dynamically absorb the remaining energy of the hybrid energy storage system; and
if the liquid fuel engine power generation unit enters the second working mode, adjusting, based on a remaining electricity charge of the battery unit, output power of the liquid fuel engine power generation unit, and controlling the battery unit to dynamically supplement energy for the hybrid energy storage system or absorb the remaining energy of the hybrid energy storage system.

By adopting the above technical solutions, when the liquid fuel engine power generation unit supplies power to the load through an energy interaction path including the direct current bus therein, the battery unit also participates in the energy interaction of the system, and the output power of the liquid fuel engine power generation unit is dynamically adjusted according to the remaining energy of the battery unit, such that the battery unit can supplement energy for the system in time or absorb the remaining energy of the system in time, thereby ensuring the operation efficiency of the system in an all-round way.

In a specific implementable solution, determining, based on power consumption of the liquid fuel engine power generation unit under different working conditions, the high-efficiency power generation range of the liquid fuel engine power generation unit specifically includes:
controlling, based on a preset power change step, the liquid fuel engine power generation unit to operate at different amounts of power; and
obtaining power consumption of the liquid fuel engine power generation unit operating at the different amounts of power, and determining, based on the power consumption of the liquid fuel engine power generation unit operating at the different amounts of power, the high-efficiency power generation range of the liquid fuel engine power generation unit.

By adopting the above technical solutions, the high-efficiency power generation range of the currently used liquid fuel engine power generation unit is accurately determined according to power consumption of the liquid fuel engine operating at different amounts of power.

In a second aspect, the present application provides a hybrid energy storage system. The hybrid energy storage system adopts the following technical solutions.

The hybrid energy storage system includes a photovoltaic power generation unit, a battery unit, an liquid fuel engine power generation unit, a load, a bidirectional current converter, and a direct current bus.

The photovoltaic power generation unit and the liquid fuel engine power generation unit are both connected to the direct current bus, the battery unit and the bidirectional current converter are both connected to the direct current bus, the bidirectional current converter is connected to the load, and the liquid fuel engine power generation unit is connected to the load via a switch S1.

By adopting the above technical solutions, a direct current bus system is constructed based on the photovoltaic power generation unit, the battery unit, the liquid fuel engine power generation unit, the load, the bidirectional current converter, and the direct current bus, such that the hybrid energy storage system performs energy interaction through the direct current bus, thereby avoiding the problem of high requirements for acquisition and control of frequencies, phases, and amplitudes of energy sources in a hybrid energy storage system connected by using an alternating current bus, and a connection manner by using the direct current bus only needs to consider a voltage. In addition, when energy on the direct current bus is stored in the battery unit or energy of the battery unit is output, multi-stage conversion is not required, thereby greatly reducing a loss in an energy conversion process, significantly improving energy conversion efficiency, ensuring a high energy utilization rate, and avoiding energy waste.

In a specific implementable solution, the photovoltaic power generation unit includes
a solar panel and a first DC
/DC converter; the battery unit includes a battery energy storage device; the liquid fuel engine power generation unit includes an liquid fuel engine and
an AC/DC converter;
the solar panel is connected to the first DC/DC converter, and the first DC/DC converter is connected to the direct current bus; the liquid fuel engine is connected to the AC/DC converter, and the AC/DC converter is connected to the direct current bus; the liquid fuel engine is connected to the load via the switch S1; and the battery energy storage device is connected to the direct current bus.

By adopting the above technical solutions, the design that the battery unit includes only a single battery energy storage device is more suitable for an application scenario of household energy storage; the single battery energy storage device is directly connected to the direct current bus, and conversion by a converter is not required, which can effectively reduce a loss during energy conversion, and meet daily needs of household energy storage.

In a specific implementable solution, the photovoltaic power generation unit includes a solar panel and a first DC/DC converter; the battery unit includes a plurality of battery energy storage devices connected in parallel and a plurality of second bidirectional DC/DC converters, and the second bidirectional DC/DC converters are connected to the battery energy storage devices in a one-to-one correspondence; the liquid fuel engine power generation unit includes an liquid fuel engine and an AC/DC converter; the solar panel is connected to the first DC/DC converter, and the first DC/DC converter is connected to the direct current bus; the liquid fuel engine is connected to the AC/DC converter, and the AC/DC converter is connected to the direct current bus; the liquid fuel engine is connected to the load via the switch S1; and each battery energy storage device is connected to the direct current bus through a correspondingly connected second bidirectional DC/DC converter.

By adopting the above technical solutions, the design that the battery unit includes a plurality of battery energy storage devices connected in parallel may cause an energy conversion loss, but achieves more flexible use and a larger capacity of the battery unit, which can better meet application requirements of industrial and commercial energy storage.

In a third aspect, the present application provides a terminal. The terminal adopts the following technical solutions: a terminal processor, a memory storing a processor-executable program, and a communication bus. The communication bus is configured to implement connection and communication between the processor and the memory, and the processor is configured to execute the processor-executable program stored in the memory, to implement the control method for a hybrid energy storage system according to the first aspect or any one of the implementable solutions of the first aspect. In summary, the technical solutions of the present application at least include the following beneficial technical effects.
1. A direct current bus system is constructed based on a photovoltaic power generation unit, a battery unit, an liquid fuel engine power generation unit, a load, a bidirectional current converter, and a direct current bus, such that the hybrid energy storage system performs energy interaction through the direct current bus, thereby avoiding the problem of high requirements for acquisition and control of frequencies, phases, and amplitudes of a plurality of energy sources in a hybrid energy storage system connected by using an alternating current bus, and a connection manner by using the direct current bus only needs to consider a voltage.
2. When energy on the direct current bus is stored in the battery unit or energy of the battery unit is output, multi-stage conversion is not required, thereby greatly reducing a loss in an energy conversion process, significantly improving energy conversion efficiency, ensuring a high energy utilization rate, and avoiding energy waste.
3. According to the energy interaction control model, the working mode of the system is finely divided and controlled for a case in which the system has a photovoltaic input and a case in which the system has no photovoltaic input, thereby further improving the energy utilization rate of the system.

### BRIEF DESCRIPTION OF THE DRAWINGS

FIG. 1 is a schematic diagram of a hybrid energy storage system connected by using an alternating current bus in the prior art;
FIG. 2 is a schematic diagram of a hybrid energy storage system connected by using a direct current bus according to an embodiment of the present application;
FIG. 3 is a schematic diagram of a process of controlling a working mode of a hybrid energy storage system according to an embodiment of the present application;
FIG. 4 is a schematic diagram of a battery unit including a battery energy storage device according to an embodiment of the present application; and
FIG. 5 is a schematic diagram of a battery unit including a plurality of battery energy storage devices connected in parallel according to an embodiment of the present application.

Description of reference numerals:
1: photovoltaic power generation unit; 11: solar panel; 12: first DC/DC converter; 2: battery unit; 21: battery energy storage device; 22: second bidirectional DC/DC converter; 3: liquid fuel engine power generation unit; 31: liquid fuel engine; 32: AC/DC converter; 4: load; 5: bidirectional current converter; 6: direct current bus; 7: power grid.

### DETAILED DESCRIPTION OF THE PREFERRED EMBODIMENTS

To make the objectives, technical solutions, and advantages of the present application clearer, embodiments of the present application are further described in detail below with reference to the accompanying drawings.

### Embodiment 1:

This embodiment discloses a control method for a hybrid energy storage system.

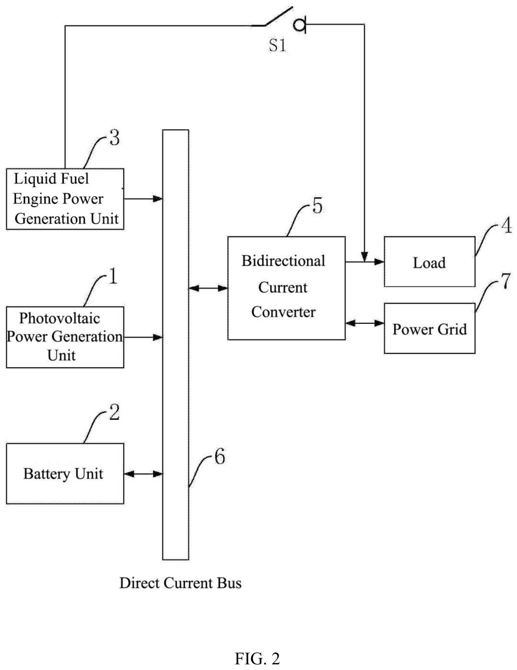

Referring to FIG. 2, the hybrid energy storage system includes a photovoltaic power generation unit 1, a battery unit 2, an liquid fuel engine power generation unit 3, a load 4, a bidirectional current converter 5, and a direct current bus 6. Specifically, the photovoltaic power generation unit 1 and the liquid fuel engine power generation unit 3 are both connected to the direct current bus 6, the battery unit 2 and the bidirectional current converter 5 are both connected to the direct current bus 6, the bidirectional current converter 5 is connected to the load 4, and the liquid fuel engine power generation unit 3 is connected to the load 4 via a switch S1. Further, the hybrid energy storage system further includes a power grid 7, the power grid 7 is connected to the direct current bus 6, and the bidirectional current converter 5 converts energy on the direct current bus 6 into an alternating current to supply power to the load 4 and the power grid 7, and also has a function of converting energy output by the power grid 7 into a direct current and connecting the direct current to the direct current bus.

The liquid fuel engine power generation unit may include a gasoline engine power generation unit, a diesel engine power generation unit, and the like. In FIG. 2, the one-way arrows indicate that energy can flow only in the arrow direction, and the two-way arrows indicate that energy can flow in two directions. The control method includes:
determining, based on a power generation state of the photovoltaic power generation unit 1, an energy input state of the hybrid energy storage system, where the energy input state includes the presence of a photovoltaic input and the absence of a photovoltaic input; specifically, if the photovoltaic power generation unit 1 has energy provided to the hybrid energy storage system, the hybrid energy storage system has a photovoltaic input; and if the photovoltaic power generation unit 1 has no energy provided to the hybrid energy storage system, the hybrid energy storage system has no photovoltaic input; and
controlling, based on the energy input state of the hybrid energy storage system and a pre-constructed energy interaction control model, a working mode of the hybrid energy storage system, where the working mode of the hybrid energy storage system includes one or more of a working mode of the photovoltaic power generation unit 1, a working mode of the battery unit 2, and a working mode of the liquid fuel engine power generation unit 3.

In the above step, the energy interaction control model includes a first energy interaction control sub-model and a second energy interaction control sub-model; the first energy interaction control sub-model is configured to control the working mode of the hybrid energy storage system when the hybrid energy storage system has a photovoltaic input; and the second energy interaction control sub-model is configured to control the working mode of the hybrid energy storage system when the hybrid energy storage system has no photovoltaic input.

Particularly, for the hybrid energy storage system including a plurality of energy sources in this embodiment, a dedicated module having an energy control function may be adopted to control the working mode of the hybrid energy storage system.

Therefore, in the hybrid energy storage system in this embodiment, a direct current bus system is constructed based on the photovoltaic power generation unit, the battery unit, the liquid fuel engine power generation unit, the load, the bidirectional current converter, and the direct current bus, such that the hybrid energy storage system performs energy interaction through the direct current bus, thereby avoiding the problem of high requirements for acquisition and control of frequencies, phases, and amplitudes of a plurality of energy sources in a hybrid energy storage system connected by using an alternating current bus, and a connection manner by using the direct current bus only needs to consider a voltage. In addition, when energy on the direct current bus is stored in the battery unit or energy of the battery unit is output, multi-stage conversion is not required, thereby greatly reducing a loss in an energy conversion process, significantly improving energy conversion efficiency, ensuring a high energy utilization rate, and avoiding energy waste. According to the energy interaction control model, the working mode of the system is finely divided and controlled for a case in which the system has a photovoltaic input and a case in which the system has no photovoltaic input, thereby further improving the energy utilization rate of the system. In the hybrid energy storage system in this embodiment, the scheduling of the liquid fuel engine power generation unit is more convenient, such that the liquid fuel engine power generation unit can work efficiently, thereby improving the energy utilization rate and the system endurance.

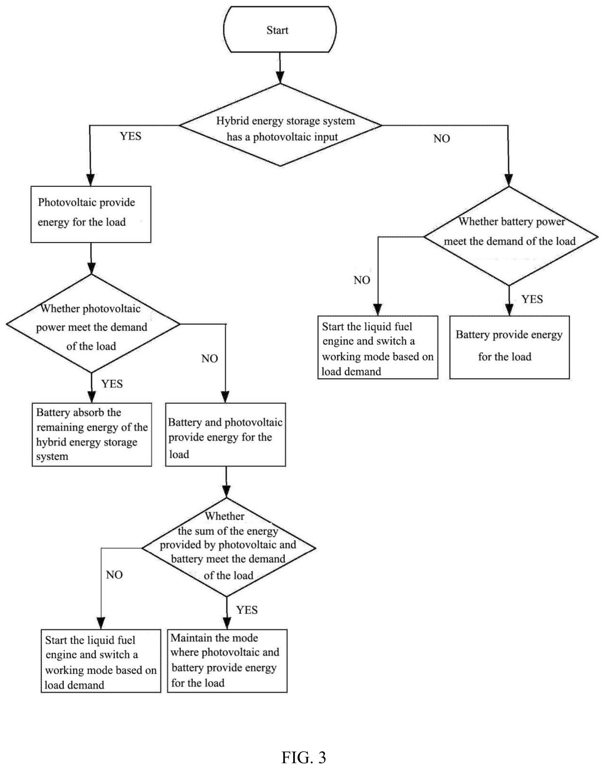

Further, referring to FIG. 3, controlling, through the first energy interaction control sub-model, the working mode of the hybrid energy storage system specifically includes:
controlling the photovoltaic power generation unit 1 to supply power to the load 4 through the direct current bus 6 and the bidirectional current converter 5, and determining whether energy provided by the photovoltaic power generation unit 1 is able to meet a power demand of the load 4;
if the energy provided by the photovoltaic power generation unit is able to meet the power demand of the load, controlling the battery unit 2 to dynamically absorb remaining energy of the hybrid energy storage system; where since the power generation power of the photovoltaic power generation unit 1 is unstable, the battery unit 2 dynamically absorbs the remaining energy of the system to charge itself, if the remaining energy of the system is relatively large, the charging power of the battery unit 2 is correspondingly increased, and if the remaining energy of the system is relatively small, the charging power of the battery unit 2 is correspondingly decreased; and
if the energy provided by the photovoltaic power generation unit is unable to meet the power demand of the load, controlling the battery unit 2 to supply power to the load 4 through the direct current bus 6 and the bidirectional current converter 5; determining whether a sum of the energy provided by the photovoltaic power generation unit 1 and energy provided by the battery unit 2 is able to meet the power demand of the load 4; and if the sum of the energy provided by the photovoltaic power generation unit and the battery unit is unable to meet the power demand of the load, starting the liquid fuel engine power generation unit 3, and controlling, based on the power demand of the load 4, the liquid fuel engine power generation unit 3 to switch a working mode;
where the working mode of the liquid fuel engine power generation unit 3 includes a first working mode and a second working mode, the first working mode indicates that the liquid fuel engine power generation unit 3 is within a high-efficiency power generation range, and the second working mode indicates that the liquid fuel engine power generation unit 3 is within a common power generation range. When the liquid fuel engine power generation unit 3 is within the high-efficiency power generation range, output power of the liquid fuel engine power generation unit 3 is relatively large, the energy conversion efficiency is relatively high, and the high-efficiency power generation range varies with different liquid fuel engines. When the liquid fuel engine power generation unit 3 is within the common power generation range, the output power of the liquid fuel engine power generation unit 3 is relatively small, and the energy conversion efficiency is relatively low.

Therefore, when the hybrid energy storage system has a photovoltaic input, the photovoltaic power generation unit first provides energy for the load, and then it is determined whether a power generation amount of the photovoltaic power generation unit meets a demand of the load. If the power generation amount of the photovoltaic power generation unit meets the demand of the load, only the battery unit needs to be controlled to dynamically adjust energy interaction in the system. If the power generation amount of the photovoltaic power generation unit does not meet the demand of the load, the battery unit is first used to supplement and provide energy. When a sum of the energy provided by the photovoltaic unit and energy provided by the battery unit is still unable to meet the demand of the load, the liquid fuel engine power generation unit is then started, and the liquid fuel engine power generation unit is controlled to enter different working modes based on the power demand of the load. The energy interaction in the system is controlled based on an actual situation of the load, to achieve effective utilization of the energy.

Particularly, since high-efficiency power generation ranges of different liquid fuel engine power generation units 3 are different, in order to accurately determine the high-efficiency power generation range of the current liquid fuel engine power generation unit 3, intelligent identification can be performed in the following manner: determining, based on power consumption of the liquid fuel engine power generation unit 3 under different working conditions, the high-efficiency power generation range of the liquid fuel engine power generation unit 3, specifically including:
controlling, based on a preset power change step, the liquid fuel engine power generation unit 3 to operate at different amounts of power; where the power change step may be set to 5%; and the liquid fuel engine power generation unit 3 is controlled to operate at the different amounts of power by providing a flow rate sensor to an liquid fuel supply circuit inside the liquid fuel engine power generation unit 3; and
obtaining power consumption of the liquid fuel engine power generation unit 3 operating at the different amounts of power, and determining, based on the power consumption of the liquid fuel engine power generation unit 3 operating at the different amounts of power, the high-efficiency power generation range of the liquid fuel engine power generation unit 3. Specifically, obtaining corresponding power consumption of the liquid fuel engine power generation unit 3 operating at the different amounts of power for a period of time, and determining, based on the corresponding power consumption of the liquid fuel engine power generation unit 3 operating at the different amounts of power for a period of time, the high-efficiency power generation range of the liquid fuel engine power generation unit 3.

Further, controlling, through the second energy interaction control sub-model, the working mode of the hybrid energy storage system specifically includes:
determining, based on a remaining electricity charge of the battery unit 2 and the power demand of the load 4, whether the energy provided by the battery unit 2 is able to meet the power demand of the load 4; where, generally, when the remaining electricity charge of the battery unit 2 is relatively large and the power demand of the load 4 is relatively small, the energy provided by the battery unit 2 is able to meet the power demand of the load 4; on the contrary, when the remaining electricity charge of the battery unit 2 is relatively small and the power demand of the load 4 is relatively large, the energy provided by the battery unit 2 is unable to meet the power demand of the load 4;
if the energy provided by the battery unit is able to meet the power demand of the load, controlling the battery unit 2 to supply power to the load 4 through the direct current bus 6 and the bidirectional current converter 5; and
if the energy provided by the battery unit is unable to meet the power demand of the load, starting the liquid fuel engine power generation unit 3, and controlling, based on the power demand of the load 4, the liquid fuel engine power generation unit 3 to switch a working mode.

Therefore, when the system has no photovoltaic input, it is first determined whether the energy provided by the battery unit is able to meet the power demand of the load. If the energy provided by the battery unit is able to meet the power demand of the load, it is only necessary to control the battery unit to supply power to the load; and if the energy provided by the battery unit is unable to meet the power demand of the load, the liquid fuel engine power generation unit is started, and the liquid fuel engine power generation unit is controlled to enter different working modes based on the power demand of the load. By controlling the energy interaction in the system based on an actual situation of the load, the effective utilization of energy is achieved.

Further, controlling, based on the power demand of the load 4, the liquid fuel engine power generation unit 3 to switch the working mode specifically includes:
if the power demand of the load 4 is within a first preset power demand range, controlling the liquid fuel engine power generation unit 3 to enter the first working mode, and controlling the liquid fuel engine power generation unit 3 to directly supply power to the load 4; where, specifically, when the power demand of the load 4 is within the first preset power demand range, it indicates that the power demand of the load 4 is relatively large, and at this time, the liquid fuel engine power generation unit 3 should enter the first working mode with a relatively large power generation power to meet the actual demand of the load 4; those skilled in the art can set the first preset power demand range in combination with the power generation capacity of the liquid fuel engine power generation unit 3, which is not limited in the present application; and
if the power demand of the load 4 falls outside the first preset power demand range, controlling the liquid fuel engine power generation unit 3 to enter the second working mode, and controlling the liquid fuel engine power generation unit 3 to supply power to the load 4 through the direct current bus 6 and the bidirectional current converter 5. Therefore, when the power demand of the load is large, the liquid fuel engine power generation unit works in the first working mode, that is, the liquid fuel engine power generation unit is within the high-efficiency power generation range, and the energy output by the liquid fuel engine power generation unit is directly supplied to the load, which can not only meet the demand of the load quickly and efficiently, but also ensure that the liquid fuel engine power generation unit is in a stage with high working efficiency, thereby avoiding fuel waste; when the power demand of the load is small, the liquid fuel engine power generation unit does not need to work within the high-efficiency power generation range, and the liquid fuel engine power generation unit works in the second working mode, that is, the liquid fuel engine power generation unit is within the common power generation range, and the energy output by the liquid fuel engine power generation unit is controlled to supply power to the load through a direct current bus path inside the system. The working mode of the liquid fuel engine power generation unit can be adjusted according to different situations, which improves the energy efficiency of the liquid fuel engine power generation unit in the whole range.

Further, in the case that the system has a photovoltaic input, after controlling, based on the power demand of the load 4, the liquid fuel engine power generation unit 3 to switch the working mode, the method further includes:
if the liquid fuel engine power generation unit 3 enters the first working mode, controlling the photovoltaic power generation unit 1, the battery unit 2, and the liquid fuel engine power generation unit 3 to supply power to the load 4, or controlling the battery unit 2 to dynamically absorb the remaining energy of the hybrid energy storage system;
where, specifically, if the liquid fuel engine power generation unit 3 enters the first working mode, it may be further determined, based on the power demand of the load 4, whether the energy output by the liquid fuel engine power generation unit 3 is able to meet the power demand of the load 4; if the energy output by the liquid fuel engine power generation unit is able to meet the power demand of the load, the power consumption of the load 4 may be provided by the liquid fuel engine power generation unit 3, and therefore the battery unit 2 is controlled to dynamically absorb the remaining energy of the hybrid energy storage system; if the energy output by the liquid fuel engine power generation unit is unable to meet the power demand of the load, the power consumption of the load 4 needs to be provided by the liquid fuel engine power generation unit 3 and the bidirectional current converter 5 at the same time, that is, the photovoltaic power generation unit 1, the battery unit 2, and the liquid fuel engine power generation unit 3 all supply power to the load 4, to adapt to a load with a higher power; and
if the liquid fuel engine power generation unit 3 enters the second working mode, adjusting, based on the remaining electricity charge of the battery unit 2, the output power of the liquid fuel engine power generation unit 3, and controlling the battery unit 2 to dynamically supplement energy for the hybrid energy storage system or absorb the remaining energy of the hybrid energy storage system;
where, specifically, when the liquid fuel engine power generation unit 3 enters the second working mode, a path for supplying power to the load indirectly supplies power to the load through a path of the internal direct current bus, and at this time, the liquid fuel engine power generation unit 3 is within the common power generation range, and the power generation power of the liquid fuel engine power generation unit 3 can be adjusted; if the remaining electricity charge of the battery unit 2 is relatively low, the output power of the liquid fuel engine power generation unit 3 is increased, which not only enables the liquid fuel engine power generation unit 3 to supply power to the load 4, but also enables the battery unit 2 to absorb the remaining energy provided by the liquid fuel engine power generation unit 3, such that the battery unit 2 is charged; if the remaining electricity charge of the battery unit 2 is relatively high, the output power of the liquid fuel engine power generation unit 3 is decreased, such that the energy output by the liquid fuel engine power generation unit 3 is supplied to the load 4, and at the same time, the battery unit 2 also participates in the process of supplying power to the load 4 and dynamically supplements the energy for the hybrid energy storage system. Therefore, when the liquid fuel engine power generation unit supplies power to the load through an energy interaction path including the direct current bus therein, the battery unit also participates in the energy interaction of the system, and the output power of the liquid fuel engine power generation unit is dynamically adjusted according to the remaining energy of the battery unit, such that the battery unit can supplement energy for the system in time or absorb the remaining energy of the system in time, thereby ensuring the operation efficiency of the system in an all-round way.

Similarly, in the case that the system has no photovoltaic input, after controlling, based on the power demand of the load 4, the liquid fuel engine power generation unit 3 to switch the working mode, the method further includes:
if the liquid fuel engine power generation unit 3 enters the first working mode, controlling the battery unit 2 and the liquid fuel engine power generation unit 3 to supply power to the load 4, or controlling the battery unit 2 to dynamically absorb the remaining energy of the hybrid energy storage system; and
if the liquid fuel engine power generation unit 3 enters the second working mode, adjusting, based on the remaining electricity charge of the battery unit 2, the output power of the liquid fuel engine power generation unit 3, and controlling the battery unit 2 to dynamically supplement energy for the hybrid energy storage system or absorb the remaining energy of the hybrid energy storage system.

For a control process and a cause in the case that the system has no photovoltaic input, reference may be made to related descriptions of the above case that the system has a photovoltaic input, and details are not described herein again.

In this embodiment, the power demand of the load 4 may be a power consumption. Embodiment 2:
This embodiment discloses a hybrid energy storage system. Referring to FIG. 2, the hybrid energy storage system includes a photovoltaic power generation unit 1, a battery unit 2, an liquid fuel engine power generation unit 3, a load 4, a bidirectional current converter 5, and a direct current bus 6.

The photovoltaic power generation unit 1 and the liquid fuel engine power generation unit 3 are both connected to the direct current bus 6, the battery unit 2 and the bidirectional current converter 5 are both connected to the direct current bus 6, the bidirectional current converter 5 is connected to the load 4, and the liquid fuel engine power generation unit 3 is connected to the load 4 via a switch S1.

Therefore, a direct current bus system is constructed based on the photovoltaic power generation unit, the battery unit, the liquid fuel engine power generation unit, the load, the bidirectional current converter, and the direct current bus, such that the hybrid energy storage system performs energy interaction through the direct current bus, thereby avoiding the problem of high requirements for acquisition and control of frequencies, phases, and amplitudes of energy sources in a hybrid energy storage system connected by using an alternating current bus, and a connection manner by using the direct current bus only needs to consider a voltage. In addition, when energy on the direct current bus is stored in the battery unit or energy of the battery unit is output, multi-stage conversion is not required, thereby greatly reducing a loss in an energy conversion process, significantly improving energy conversion efficiency, ensuring a high energy utilization rate, and avoiding energy waste.

Further, still referring to FIG. 2, the hybrid energy storage system may further include a power grid 7, and the power grid 7 is connected to the direct current bus 6.

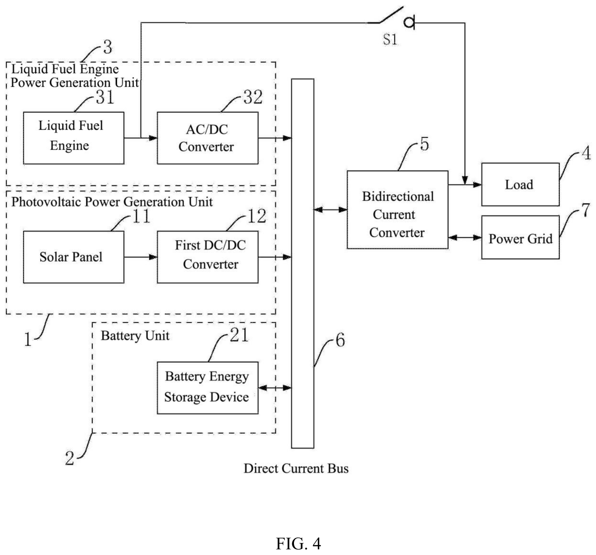

Further, referring to FIG. 4, the battery unit 2 may include a battery energy storage device 21. In FIG. 4, the one-way arrows indicate that energy can flow only in the arrow direction, and the two-way arrows indicate that energy can flow in two directions. The internal composition of each unit in the hybrid energy storage system is described in detail below with reference to FIG. 4.

The photovoltaic power generation unit 1 includes a solar panel 11 and a first DC/DC converter 12; the battery unit 2 includes a battery energy storage device 21; the number of the battery energy storage device 21 is 1; and the liquid fuel engine power generation unit 3 includes an liquid fuel engine 31 and an AC/DC converter 32.

The solar panel 11 is connected to the first DC/DC converter 12, and the first DC/DC converter 12 is connected to the direct current bus 6; the liquid fuel engine 31 is connected to the AC/DC converter 32, and the AC/DC converter 32 is connected to the direct current bus 6; the liquid fuel engine 31 is connected to the load 4 via a switch S1; and the battery energy storage device 21 is connected to the direct current bus 6.

In the liquid fuel engine power generation unit 3, the AC/DC converter 32 may convert an alternating current output by the liquid fuel engine 31 into a direct current required by the direct current bus, and transfer energy output by the liquid fuel engine 31 to the direct current bus. In the photovoltaic power generation unit 1, the first DC/DC converter 12 may convert a direct current output by the solar panel 11 into a direct current required by the direct current bus, and transfer energy output by the solar panel 11 to the direct current bus. In addition to a voltage conversion function, the first DC/DC converter 12 further has a maximum power tracking function, and the energy output by the solar panel 11 can flow into the direct current bus 6 only in one direction. In the battery unit 2, the battery energy storage device 21 may absorb remaining energy of the hybrid energy storage system through charging or provide energy for the hybrid energy storage system through discharging based on a voltage value on the direct current bus. The bidirectional current converter 5 converts a direct current on the direct current bus 6 into an alternating current, to supply power to the load 4. The liquid fuel engine power generation unit 3 uses a combustible fuel such as fossil fuel to generate mechanical energy through fuel combustion, and then converts the mechanical energy into electric energy. For example, an engine is used to convert the energy generated by fuel combustion into mechanical energy, and the mechanical energy drives a generator to work to generate electric energy. The fuel in the liquid fuel engine power generation unit 3 includes, but is not limited to, diesel, gasoline, etc.

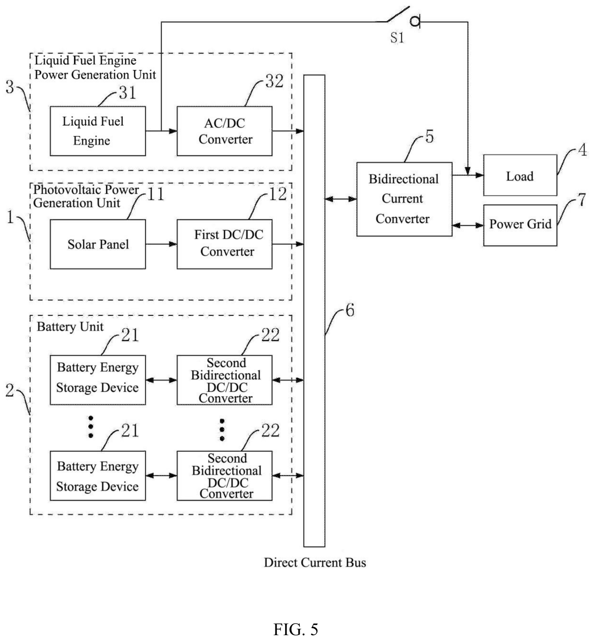

Further, referring to FIG. 5, the battery unit 2 may further include a plurality of battery energy storage devices 21 connected in parallel. In FIG. 5, the one-way arrows indicate that energy can flow only in the arrow direction, and the two-way arrows indicate that energy can flow in two directions. Specifically, the internal composition of each unit in the hybrid energy storage system is described in detail below with reference to FIG. 5. The photovoltaic power generation unit 1 includes a solar panel 11 and a first DC/DC converter 12; the battery unit 2 includes a plurality of battery energy storage devices 21 connected in parallel and a plurality of second bidirectional DC/DC converters 22, and the second bidirectional DC/DC converters 22 are connected to the battery energy storage devices 21 in a one-to-one correspondence; the liquid fuel engine power generation unit 3 includes an liquid fuel engine 31 and an AC/DC converter 32;
the solar panel 11 is connected to a first DC/DC converter 12, and the first DC/DC converter 12 is connected to the direct current bus 6; the liquid fuel engine 31 is connected to the AC/DC converter 32, and the AC/DC converter 32 is connected to the direct current bus 6; the liquid fuel engine 31 is connected to the load 4 via a switch S1; and each battery energy storage device 21 is connected to the direct current bus 6 through a correspondingly connected second bidirectional DC/DC converter 22.

It should be noted that, in the structure shown in FIG. 4 and the structure shown in FIG. 5, although the internal compositions of the battery unit 2 are different, control methods of the entire system are the same, and different battery units 2 may be selected according to an application scenario. For example, the design that the battery unit 2 includes only a single battery energy storage device 21 may be used for household energy storage, which does not require an excessively large battery capacity; the single battery energy storage device 21 is directly connected to the direct current bus, and conversion by a converter is not required, which can effectively reduce a loss during energy conversion, and meet daily needs of household energy storage; however, a voltage of the single battery energy storage device 21 needs to be consistent with a voltage on the direct current bus 6. The design that the battery unit 2 includes a plurality of battery energy storage devices 21 connected in parallel may be used for industrial and commercial energy storage; this design may cause an energy conversion loss, but achieves more flexible use and a larger capacity of the battery unit, which can better meet application requirements of industrial and commercial energy storage.

Further, the hybrid energy storage system in this embodiment can apply the control method described in Embodiment 1. When the liquid fuel engine power generation unit 3 enters the first working mode, the switch S1 is turned on, such that the liquid fuel engine power generation unit 3 can directly supply power to the load 4. When the liquid fuel engine power generation unit 3 enters the second working mode, the switch S1 is turned off, such that the liquid fuel engine power generation unit 3 can supply power to the load 4 through the direct current bus 6 and the bidirectional current converter 5.

### Embodiment 3:

This embodiment discloses a terminal. The terminal includes: a processor, a memory storing a processor-executable program, and a communication bus. The communication bus is configured to implement connection and communication between the processor and the memory, and the processor is configured to execute the processor-executable program stored in the memory, to implement the control method for a hybrid energy storage system according to Embodiment 1.

The above embodiments are merely preferred embodiments of the present application, and are not intended to limit the protection scope of the present application. Therefore, any equivalent changes made based on the structures, shapes, and principles of the present application shall all fall within the protection scope of the present application.

## Claims

1. A control method for a hybrid energy storage system, wherein the hybrid energy storage system comprises a photovoltaic power generation unit (1), a battery unit (2), a liquid fuel engine power generation unit (3), a load (4), a bidirectional current converter (5), and a direct current bus (6); and the control method comprises:
determining, based on a power generation state of the photovoltaic power generation unit (1), an energy input state of the hybrid energy storage system, wherein the energy input state comprises the presence of a photovoltaic input and the absence of a photovoltaic input; and controlling, based on the energy input state of the hybrid energy storage system and a pre-constructed energy interaction control model, a working mode of the hybrid energy storage system, wherein the working mode of the hybrid energy storage system comprises one or more of a working mode of the photovoltaic power generation unit (1), a working mode of the battery unit (2), and a working mode of the liquid fuel engine power generation unit (3);
wherein the energy interaction control model comprises a first energy interaction control sub-model and a second energy interaction control sub-model; the first energy interaction control sub-model is configured to control the working mode of the hybrid energy storage system when the hybrid energy storage system has a photovoltaic input; and the second energy interaction control sub-model is configured to control the working mode of the hybrid energy storage system when the hybrid energy storage system has no photovoltaic input; and
wherein the step of controlling, through the first energy interaction control sub-model, the working mode of the hybrid energy storage system specifically comprises:
controlling the photovoltaic power generation unit (1) to supply power to the load (4) through the direct current bus (6) and the bidirectional current converter (5), and determining whether energy provided by the photovoltaic power generation unit (1) is able to meet a power demand of the load (4);
if the energy provided by the photovoltaic power generation unit is able to meet the power demand of the load, controlling the battery unit (2) to dynamically absorb remaining energy of the hybrid energy storage system; and
if the energy provided by the photovoltaic power generation unit is unable to meet the power demand of the load, controlling the battery unit (2) to supply power to the load (4) through the direct current bus (6) and the bidirectional current converter (5); determining whether the sum of the energy provided by the photovoltaic power generation unit (1) and energy provided by the battery unit (2) is able to meet the power demand of the load (4); and if the sum of the energy provided by the photovoltaic power generation unit and the battery unit is unable to meet the power demand of the load, starting the liquid fuel engine power generation unit (3), and controlling, based on the power demand of the load (4), the liquid fuel engine power generation unit (3) to switch a working mode;
wherein the working mode of the liquid fuel engine power generation unit (3) comprises a first working mode and a second working mode, the first working mode indicates that the liquid fuel engine power generation unit (3) is within a high-efficiency power generation range, and the second working mode indicates that the liquid engine power generation unit (3) is within a common power generation range; and controlling, based on the power demand of the load (4), the liquid fuel engine power generation unit (3) to switch the working mode specifically comprises:
if the power demand of the load (4) is within a first preset power demand range, controlling the oil engine power generation unit (3) to enter the first working mode, and controlling the oil engine power generation unit (3) to directly supply power to the load (4); and
if the power demand of the load (4) falls outside the first preset power demand range, controlling the liquid fuel engine power generation unit (3) to enter the second working mode, and controlling the liquid fuel engine power generation unit (3) to supply power to the load (4) through the direct current bus (6) and the bidirectional current converter (5).

2. The control method for a hybrid energy storage system according to claim 1, wherein controlling, through the second energy interaction control sub-model, the working mode of the hybrid energy storage system specifically comprises:
determining, based on a remaining electricity charge of the battery unit (2) and the power demand of the load (4), whether the energy provided by the battery unit (2) is able to meet the power demand of the load (4);
if the energy provided by the battery unit is able to meet the power demand of the load, controlling the battery unit (2) to supply power to the load (4) through the direct current bus (6) and the bidirectional current converter (5); and
if the energy provided by the battery unit is unable to meet the power demand of the load, starting the liquid fuel engine power generation unit (3), and controlling, based on the power demand of the load (4), the liquid fuel engine power generation unit (3) to switch a working mode.

3. The control method for a hybrid energy storage system according to claim 1, wherein after controlling, based on the power demand of the load (4), the liquid fuel engine power generation unit (3) to switch the working mode, the control method further comprises:
if the liquid fuel engine power generation unit (3) enters the first working mode, controlling the photovoltaic power generation unit (1), the battery unit (2), and the liquid fuel engine power generation unit (3) to supply power to the load (4), or controlling the battery unit (2) to dynamically absorb the remaining energy of the hybrid energy storage system; and
if the liquid fuel engine power generation unit (3) enters the second working mode, adjusting, based on a remaining electricity charge of the battery unit (2), output power of the liquid fuel engine power generation unit (3), and controlling the battery unit (2) to dynamically supplement energy for the hybrid energy storage system or absorb the remaining energy of the hybrid energy storage system.

4. The control method for a hybrid energy storage system according to claim 1, wherein determining, based on power consumption of the liquid fuel engine power generation unit (3) under different working conditions, the high-efficiency power generation range of the liquid fuel engine power generation unit (3) specifically comprises:
controlling, based on a preset power change step, the liquid fuel engine power generation unit (3) to operate at different amounts of power; and
obtaining power consumption of the liquid fuel engine power generation unit (3) operating at the different amounts of power, and determining, based on the power consumption of the liquid fuel engine power generation unit (3) operating at the different amounts of power, the high-efficiency power generation range of the liquid fuel engine power generation unit (3).

5. A terminal, comprising: a processor, a memory storing a executable program, and a communication bus, wherein the communication bus is configured to implement connection and communication between the processor and the memory, and the processor is configured to execute the executable program stored in the memory, to implement the control method for a hybrid energy storage system according to any one of claims 1 to 4.
